(19) **Europäisches Patentamt / European Patent Office / Office européen des brevets**

(11) **EP 2 507 491 B1**

(12) **FASCICULE DE BREVET EUROPEEN**

(45) Date de publication et mention de la délivrance du brevet:
**11.05.2016 Bulletin 2016/19**

(21) Numéro de dépôt: **10799105.1**

(22) Date de dépôt: **25.11.2010**

(51) Int Cl.:
**F01N 11/00** *(2006.01)*

(86) Numéro de dépôt international:
**PCT/FR2010/052526**

(87) Numéro de publication internationale:
**WO 2011/067518 (09.06.2011 Gazette 2011/23)**

(54) **SYSTÈME ET PROCÉDÉ D'ESTIMATION DE LA MASSE DE PARTICULES STOCKÉES DANS UN FILTRE A PARTICULES DE VÉHICULE AUTOMOBILE**

SYSTEM UND VERFAHREN ZUR SCHÄTZUNG DER MASSE VON IN EINEM PARTIKELFILTER AUFBEWAHRTEN PARTIKELN EINES KRAFTFAHRZEUGS

SYSTEM AND METHOD FOR ESTIMATING THE MASS OF PARTICLES STORED IN A PARTICLE FILTER OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2009 FR 0958630**

(43) Date de publication de la demande:
**10.10.2012 Bulletin 2012/41**

(73) Titulaire: **RENAULT S.A.S.**
**92100 Boulogne Billancourt (FR)**

(72) Inventeurs:
- **SADAI, Stéphane**
  **F-75013 Paris (FR)**
- **BEN-CHERIF, Karim**
  **F-92800 Puteaux (FR)**
- **BEN-AICHA, Fehd**
  **F-78280 Guyancourt (FR)**
- **TURPIN, Thomas**
  **F-91940 Les Ulis (FR)**

(56) Documents cités:
EP-A1- 1 209 333       EP-A1- 1 529 929
US-A1- 2004 260 452    US-A1- 2006 032 217

EP 2 507 491 B1

Printed by Jouve, 75001 PARIS (FR)

**Description**

L'invention coicerne l'estimation de la masse de particules stockées dans un filtre à particules de véhicule automobile, et en particulier un filtre à particules monté dans la ligne d'échappement du moteur à combustion interne d'un tel véhicule.

Actuellement, les normes antipollution appliquées aux véhicule automobile implosent des niveaux d'émission en oxydes d'azote et en particules très faibles. C'est pourquoi, certains véhicules atteignent ces niveaux d'émission requis par la mise en oeuvre d'un système de post-traitement spécifique dans la ligne d'échappement du véhicule capable de traiter les deux polluants.

Outre leur prix de revient de fabrication relevé, ces systèmes de post-traitement des oxydes d'azote et de particules engendrent des surconsommations en carburant et une complexité de la ligne d'échappement. Par ailleurs, ces système de post-traitement diminuent les performances du moteur du véhicule et nécessitent le développement de stratégies complexes de pilotage et de contrôle.

On notera que le filtre à particules est un élément du post-traitement des gaz d'échappement d'un moteur à combustion interne qui sert à stocker les particules de suie qui sortent du moteur. Lorsque la masse de particules dans le filtre atteint une masse limite, le filtre est régénéré par combustion des particules qu'il contient en utilisant notamment un catalyseur pour éleveur la température au sein du filtre à particules au moyen d'une injection supplémentaire de carburant.

Il est donc intéressant d'obtenir une estimation précise de la masse de particules contenues dans le filtre à particules de marnière à déterminer la fréquence de régénération du filtre, et ainsi diminuer la consommation en carburant. En outre, il est intéressant de connaître la masse de particules contenues dans le filtre pour minimiser le volume dudit filtre et ainsi minimiser son coût de fabrication.

Il existe certaines méthodes pour estimer la masse de particules de suie, stockées dans un filtre à particules. On peut par exemple citer la demande de brevet français FR 2849103, déposée au nom de la demanderesse, qui décrit un procédé de détermination de la masse de suies dans un filtre à particules au cours d'une régénération du filtre, dans lequel on mesure une teneur en oxygène des gaz d'échappement en amont et en aval du filtre. Mais ce procédé n'est pas assez précis pour répondre aux normes actuelles antipollution. En outre il utilise deux sondes à oxygène qui sont particulièrement coûteuses.

Aussi les documents EP152992A1 et EP1209333A1 décrivent des procédés de détermination de la masse de suies dans un filtre à particules.

Il existe donc un besoin pour améliorer la prévision de l'estimation de la masse de particules stockées dans un filtre à particules.

Il est également intéressant de fournir un moyen d'estimation qui utilise un minimum de capteurs afin de réduire les coûts de réalisation et de mise en oeuvre.

Par ailleurs, il est intéressant de fournir un moyen pour réduire la dispersion de l'estimation de la masse de particules stockées dans un filtre à particules.

Il est donc proposé un système et un procédé d'estimation de la masse de particules stockées dans un filtre a particules de véhicule automobile qui puisse répondre aux problèmes évoqués ci-dessus.

Selon un aspect, il est proposé un système d'estimation de la masse de particules stockées dans un filtre à particules monté dans la ligne d'échappement d'un moteur à combustion interne de véhicule automobile, comprenant des moyens pour mesurer une pression différentielle aux bornes du filtre à particules.

Ce système comprend un premier moyen d'estimation pour estimer un débit due particules différentiel aux bornes du filtre à particules, un deuxième moyen d'estimation pour estimer une pression différentielle aux bornes du filtre a particules, et un troisième moyen d'estimation pour estimer la masse de particules stockées dans le filtre à particules à partir d'une somme entre le débit de particules différentiel et un écart calculé entre l'estimation et la mesure de la pression différentielle.

Un tel système permet de prendre en compte les estimations du débit de particules et de la pression aux bornes du filtre et la mesure de la pression différentielle afin de préciser l'estimation de la masse de particules stockées. Par ailleurs, les estimations sont réalisées en temps réel et ainsi, on fournit un système d'estimation qui nécessite peu d'essais importants préalables.

Avantageusement, le système comprend un moyen de détermination pour déterminer un coefficient variable, et le troisième moyen d'estimation est apte à multiplier l'écart calculé par le coefficient variable.

L'utilisation d'un coefficient variable permet de pondérer la valeur de l'écart de pression différentielle par rapport à l'estimation du débit différentiel afin de corriger l'estimation de la masse de particules stockées.

Selon un autre avantage, le système comprend des moyens pour mesurer un débit des gaz en amont du filtre a particules et le moyen de détermination est apte à déterminer le coefficient variable proportionnellement à la mesure du débit des gaz en amont du filtre à particules.

Ainsi, on fournit une estimation de la masse de particules stockées suffisamment précise lorsque, notamment, le débit des gaz à la sortie du moteur est faible. En effet, à l'aide du coefficient variable déterminé en ponction du débit des gaz en amont du filtre, on peut privilégier l'estimation du débit de particules différentiel par rapport à l'écart calculé lorsque le débit des gaz d'échappement est faible. En outre, Lorsque le débit des gaz d'échappement est faible, l'estimation de la pression différentielle aux bornes du filtre à particules est imprécise, dans ce cas l'écart calculé est également imprécis.

Crâce à un tel système, on fournit un moyen pour estimer la masse de particules stockées dans un filtre à particules quels que soient le mode ou la zone de fonctionnement du moteur du véhicule.

Selon un mode de réalisation, le système comprend des moyens pour mesurer la température du filtre à particules, des concentrations en oxygène et en oxydes d'azote en aval du filtre à particules et un débit de particules en amont du filtre à particules, et le premier moyen d'estimation est en outre configuré pour estimer un débit de particules en aval du filtre à particules à partir de l'estimation de la masse de particules stockées et des mesures des concentrations en oxygène et en oxydes d'azote et de la température du filtre à particules, et pour estimer le débit de particules différentiel à partir d'une différence entre la mesure du débit de particules en amont du filtre à particules et l'estimation du débit de particules en aval du filtre à particules.

A l'aide d'un tel système, on fournit une estimation de la masse de particules stockées de manière suffisamment précise à l'aide d'un minimum de capteurs.

Selon un autre mode de réalisation, le système comprend des moyens pour mesurer la température du filtre à particules et le premier moyen d'estimation comprend des moyens pour estimer une richesse, un couple, un régime et une température du moteur et des concentrations en oxygène et en oxydes d'azote en aval du filtre à particules, le premier moyen d'estimation étant, en outre, apte à estimer un débit de particules en amont du filtre à particules a partir des estimations de la richesse, du couple, du régime et de la température du moteur, à estimer un débit de particules en aval du filtre à particules à partir des estimations de la masse de particules stockées et des concentrations en oxygène et en oxydes d'azote et à partir de la mesure de la température du filtre à particules, et à estimer le débit de particules différentiel aux bornes du filtre à particules à partir d'une différence entre les estimations du débit de particules en amont et en aval du filtre à particules.

Ainsi, on peut fournir un système d'estimation de la masse de particules stockées de manière encore plus précise, en utilisant notamment plusieurs capteurs pour mesurer différents paramètres nécessaires à l'élaboration des débites de particules mesurés en amont et en aval du filtre à particules.

Selon un autre aspect, il est proposé un procédé d'estimation de la masse de particules stockées dans un filtre à particules monté dans la ligne d'échappement d'un moteur à combustion interne de véhicule automobile, comprenant une mesure de pression différentielle aux bornes du filtre à particules.

Ce procédé comprend des estimations d'un débit de particules différentiel et d'une pression différentielle aux bornes du filtre à particules et une estimation de la masse de particules stockées dans le filtre à particules à partir d'une somme entre le débit de particules différentiel et le calcul d'un écart entre l'estimation et la mesure de la pression différentielle.

Avantageusement, ce procédé comprend une détermination d'un coefficient variable, et on multiplie l'écart calculé par le coefficient variable,

Selon un autre avantage, ce procédé comprend une mesure d'un débit des gaz en amont du filtre à particules et on détermine le coefficient variable proportionnellement à la mesure du débit des gaz en amont du filtre à particules.

Selon un mode de mise en oeuvre, le procédé comprend des mesures de la température filtre à particules, des concentrations en oxygène et en oxydes d'azote en aval du filtre à particules et d'un débit de particules en amont du filtre à particules, et on estime un débit de particules en aval du filtre à particules a partir de l'estimation de la masse de particules stockées et des mesures des concentrations en oxygène et en oxydes d'azote et de la température du filtre à particules, et on estime le débit de particules différentiel à partir d'une différence entre la mesure du débit de particules en amont du filtre à particules et l'estimation du débit de particules en aval du filtre à particules.

Selon un autre mode de mise en oeuvre, le procédé comprend une mesure de la température du filtre à particules, et on estime une richesse, un couple, un régime et une température du moteur et des concentrations en oxygène et en oxydes d'azote en aval du filtre à particules, on estime un débit de particules en amont du filtre à particules à partir des estimations de la richesse, du couple, du régime et de la température du moteur, on estime un débit de particules en aval du filtre à particules à partir des estimations de la masse de particules stockées, et des concentrations en oxygène et en oxydes d'azote et à partir de la mesure de la température du filtre à particules, et on estime le débit de particules différentiel aux bornes du filtre à particules a partir d'une différence entre les estimations du débit de particules en amont et en aval du filtre à particules.

D'autres buts, caractéristiques et avantages de l'invention apparaîtront à la lecture de la description suivante, donnée uniquement à titre d'exemple non limitatif, et faite en référence aux dessins annexés, sur lesquels :

- la figure 1 est une vue schématique d'un système d'estimation de la masse de particules stockées dans un filtre à particules de véhicule automobile ; est

-    la figure 2 est une vue schématique d'un autre mode de réalisation d'un système d'estimation de la masse de particules stockées dans un filtre à particules de véhicule automobile.

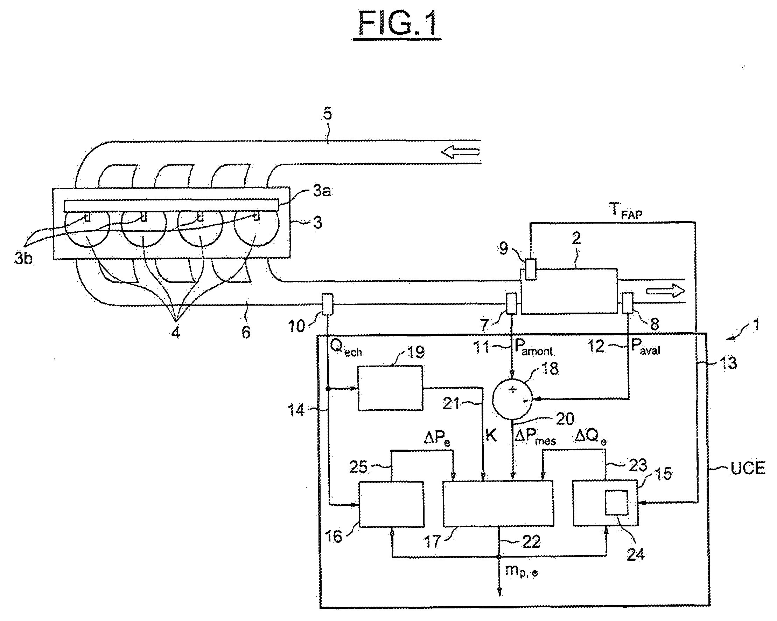

Sur la figure 1, on a représenté schématiquement un système d'estimation 1 de la masse de particules stockées dans un filtre à particules 2 d'un véhicule automobile.

Le véhicule automobile comprend un moteur à combustion interne 3 muni, de préférence, de quatre cylindres 4 alimentés en carburant par une rampe d'injection 3a équipée d'au moins un injecteur de carburant 3b par cylindre 4. Le moteur à combustion interne 3 est alimenté en air via un conduit d'admission 5 et rejette des gaz d'échappement issus de la combustion via une ligne d'échappement 6. Cette ligne d'échappement 6 est équipée d'un système de post-traitement des gaz d'échappement qui comprend notamment le filtre à particules 2. Cette ligne d'échappement 6 peut comprendre également un catalyseur non représenté sur la figure, afin de régénérer ledit filtre à particules et peut aussi comprendre un piège à oxydes d'azote pour améliorer le traitement desdits gaz d'échappement.

Le Système d'estimation 1 comprend des moyens 7, 8 pour mesurer une pression en amont $P_{amont}$ et en aval $P_{aval}$ du filtre 2, par exemple deux capteurs 7, 8 de pression placés respectivement en amont et en aval dudit filtre à particules 2. Le système d'estimation 1 comprend également des moyens 9 pour mesurer la température du filtre à particules $T_{FAP}$, par exemple un capteur de température 9. Le système d'estimation 1 comprend également des moyens 10 pour mesurer un débit des gaz en amont du filtre à particules $Q_{ech}$, par exemple un débitmètre 10 placé sur la ligne d'échappement 6 entre le moteur 3 et le filtre à particules 2.

Le système d'estimation 1 comprend en outre une unité de commande électronique UCE configurée pour recevoir les mesures effectuées par les capteurs 7 à 10 via respectivement des connexions 11 à 14 afin de déterminer une estimation $m_{p,e}$ de la masse de particules stockées dans le filtre à particules 2.

Par ailleurs, l'unité de commande électronique UCE comprend un premier moyen d'estimation 15 pour estimer un débit de particules différentiel aux bornes du filtre à particules $\Delta Q_e$, un deuxième moyen d'estimation 16 pour estimer une pression différentielle aux bornes du filtre à particules $\Delta P_e$ et un troisième moyen d'estimation 17 pour estimer la masse de particules stockées dans le filtre à particules $m_{p,e}$.

En outre, unité de commande électronique UCE comprend des moyens de calcul 18 et un moyen de détermination 19.

Les moyens de calcul 18 reçoivent les mesures des pressions en amont et en aval du filtre à particules $P_{amont}$, $P_{aval}$ respectivement transmises par les connexions 11 et 12, afin d'élaborer une mesure de la pression différentielle, aux bornes du filtre à particules $\Delta P_{mes}$ et transmettre cette dernière aux troisième moyens d'estimation 17 via une connexion 20. La mesure de la pression différentielle aux bornes du filtre à particules $\Delta P_{mes}$ est égale à la différence entre la mesure de la pression en amont du filtre $P_{amont}$ et la mesure de la pression en aval du filtre à $P_{aval}$.

Le moyen de détermination 19 est configuré pour déterminer un coefficient variable K et pour transmettre ledit coefficient variable K au troisième moyen d'estimation 17 via une connexion 21.

Le premier moyen d'estimation 15 reçoit la mesure de la témpérature du filtre $T_{FAP}$ via la connexion 13 et l'estimation de la masse de particules $m_{p,e}$ via une connexion 22 afin d'estimer le débit de particules différentiel $\Delta Q_e$ et transmettre la valeur de ce débit différentiel au troisième moyen d'estimation 17 via une connexion 23.

Ce premier moyen d'estimation 15 estime le débit différentiel $\Delta Q_e$ à partir du principe de conservation de masse au niveau du filtre à particules 2 selon l'équation suivante (1) :

$$\Delta Q_e = Q_p^{FAP,amont} - Q_p^{FAP,aval} \qquad (1)$$

avec:

-    $Q_p^{FAP,amont}$ : débit de particules en amont du filtre à particules 2 ;
-    $Q_p^{FAP,aval}$ : débit de particules en aval du filtre à particules 2.

Afin d'estimer le débit différentiel $\Delta Q_e$, on va estimer les débits de particules en entrée; et en sortie du filtre à particules à l'aide d'un minimum de capteurs selon un premier mode de réalisation représenté sur la figure 1.

On peut estimer le débit de particules en amont du filtre 2 en fonction de paramètres du moteur 3 selon l'équation (2) suivante :

$$Q_p^{FAP,amont} = f_{stockage}\left(\phi_{mot}, T_{mot}, N_{mot}, T_{mot}\right) \qquad (2)$$

avec:

$Q_p^{FAP,amont}$ : débit de particules en amont du filtre à particules 2 ;
- $\phi_{mot}$ : richesse du moteur 3 égale au rapport entre la masse de carburant et la masse d'air injecté dans les cylindres 4 ;
- $\Gamma_{mot}$ : couple du moteur 3 ;
- $N_{mot}$ : régime du moteur 3 ;
- $T_{mot}$ : température du moteur 3 ; et
- $f_{stockage}$ : fonction d'estimation du débit de particules en entrée du filtre à particules 2.

Le premier moyen d'estimation 15 comprend en outre des moyens 24 pour calculer lesdits paramètres du moteur $\phi_{mot}$, $\Gamma_{mot}$, $N_{mot}$, $T_{mot}$ à partir de calculateurs, ou de capteurs non représentes sur la figure.

Par ailleurs, lorsque les émissions d'oxydants, notamment les oxydes d'azote, en sortie du moteur 3 sont suffisamment élevées, elles réagissent avec les particules stockées, dans le filtre à particules 2. Des trous de la couche de particules apparaissent alors dans certains canaux du filtre à particules 2, notamment dans les canaux où la température est la plus élevée. Le débit de particules en aval du filtre à particules est donc fonction des concentrations en oxygène et en oxydes d'azote, de la température du filtre à particules $T_{FAP}$, ainsi que de la masse stockée dans le filtre à particules 2 selon l'équation (3) suivante :

$$Q_p^{FAP,aval} = f_{déstockage}\left(m_{p,e}, T_{FAP}, C_{O2}^{aval}, C_{NOx}^{aval}\right) \qquad (3)$$

avec:

$Q_p^{FAP,aval}$ : débit de particules en aval du filtre à particules 2 ;
- $m_{p,e}$ : estimation de la masse de particules stockées dans le filtre à particules ;
- $T_{FAP}$ : température du filtre à particules ;
- $C_{D2}^{aval}$ : concentration d'oxygène en aval du filtre à particules 2 mesurée par une sonde à oxygène ou à l'aide d'un estimateur de richesse base sur le débit du carburant et le débit d'air injecté dans le moteur 3 ;
- $C_{NOx}^{aval}$ : d'azote en aval du filtre à particules 2 mesurée à partir d'un capteur à oxydes d'azoté ou à partir d'un estimateur d'oxydes d'azote basé sur la pression du cylindre et le débit d'air, notamment et
- $f_{déstockage}$ : fonction d'estimation du débit de particules en sortie du filtre à particules 2.

Les moyens 24 sont en outre configurés pour estimer les concentrations en oxygène et en oxydes d'azote en aval du filtre à particules 2.

Le deuxième moyen d'estimatton 16 reçoit la mesure du débit des gaz en amont du filtre à particules $Q_{ech}$ et l'estimation de la masse de particules $m_{p,e}$ respectivement par les connexions 14 et 22 afin d'estimer la pression différentielle $\Delta P_e$ aux bornes du filtre à particules, cette dernière étant transmise au troisième moyen d'estimation 17 via une connexion 25. L'estimation de la pression différentielle aux barries du filtre à pàrtfcutes $\Delta P_e$ est établie en fonction du débit des gaz en amont du filtre à particules $Q_{ech}$, d'une température en entrée du filtre à particules $T_{amont,FAP}$ et de l'estimation de la masse de particules $m_{p,e}$. En outre, le deuxième moyen d'estimation 16 est configuré pour estimer la température en entrée du filtre à particules $T_{amont,FAP}$ et pour estimer la pression différentielle $\Delta P_e$ selon l'équation (4) suivante :

$$\Delta P_e = f\left(m_{p,e}, Q_{ech}, T_{amont,FAP}\right) \qquad (4)$$

avec :

- $m_{p,e}$ : estimation de la masse de particules ;
- $Q_{ech}$ : débit des gaz en amont du filtre à particules 2 ;
- $T_{amont,FAP}$ : température en entrée du filtre à particules 2 ; et
- f ; fonction d'estimation de la pression différentielle aux bornes du filtre à particules.

Par exemple, le débit des gaz en amont du filtre à particules peut être mesuré via le débitmètre 10, il peut également être calculé à partir d'un débit d'air entrant dans le moteur et d'un débit de carburant selon un principe de conservation de masse.

Le troisième moyen d'estimation 17 reçoit l'estimation du débit différentiel $\Delta Q_e$ via la connexion 23, la mesure de la pression différentielle $\Delta P_{mes}$ via la connexion 20, le coefficient variable K via la connexion 21 et l'estimation de la

pression différentielle $\Delta P_e$ via la connexion 23, afin d'estimer la masse de particules stockées $m_{p,e}$ et transmettre cette estimation via la connexion 22.

Le troisième moyen d'estimation 17 permet d'estimer la masse de particules stockées dans le filtre à particules selon l'équation (5) suivante ;

$$\frac{dm_{p,e}}{dt} = \Delta Q_e + K \cdot \left( \Delta P_{mes} - \Delta P_e \right) \qquad (5)$$

avec :

- $m_{p,e}$ : estimation de la masse de particules ;
- $\Delta Q_e$ : estimation du débit différentiel ;
- K : coefficient variable ;
- $\Delta P_{mes}$ : mesure de la pression différentielle aux bornes du filtre à particules 2 ;
- $\Delta P_e$ : estimation de la pression différentielle aux bornes du filtre à particules.

Le coefficient variable K est une caltbration qui permet de donner plus d'importance à l'estimation du débit de particules différentiel ou à la mesure de la pression différentielle. Le coefficient variable K peut être obtenu d'une façon théorique en utilisant, par exemple, les méthodes de type Kalman (R.E. Kalman and R. Bucy, « New results in linear filtering and prediction », Journal of basic engineering (ASME), 83D :98-108, 1961) ou par cartographie en fonction de paramètres du moteur 3, par exemple le régime du moteur et le couple du moteur.

Cette estimation $m_{p,e}$ permet de faire un suivi dynamique de la masse de particules ainsi, à chaque fois que la mesure de la pression différentielle le permet, l'amplification du gain K permet de corriger et de faire converger l'équation (5) vers la masse de particules stockées réelle.

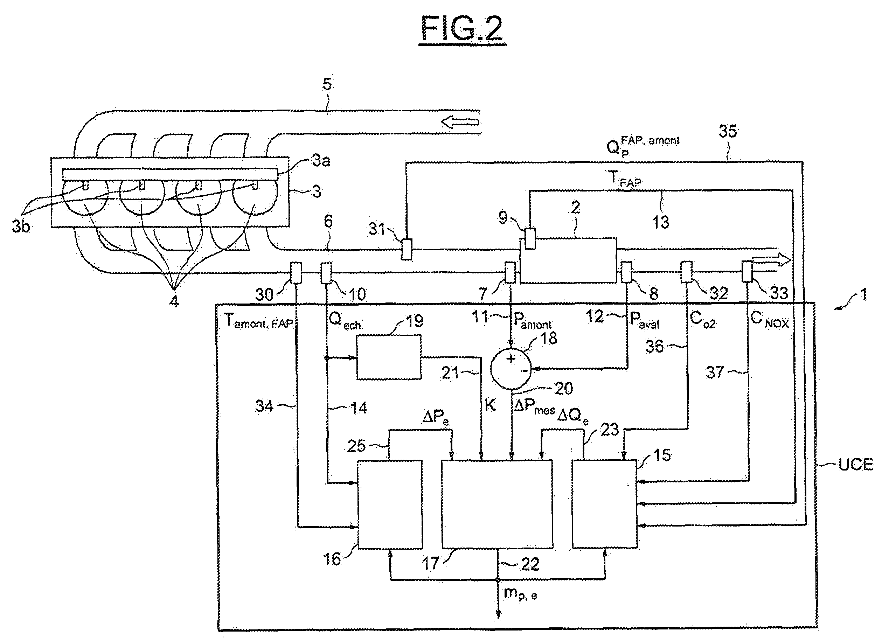

Sur la figure 2, on a représenté une vue schématique d'un autre mode de réalisation du système d'estimation 1 de la masse de particules stockées dans un filtre a particules 2. On a également reporté sur cette figure les références précédemment décrites à la figure 1.

Dans ce mode de réalisation, on utilise d'autres capteurs afin de préciser certaines variables estimées.

Le système d'estimation 1 comprend un capteur 30 pour mesurer la température en amont du filtre à particules $T_{amont,FAP}$, un capteur 31 pour mesurer le débit de particules en amont du filtre à particules $Q_p^{FAP,amont}$, par exemple un débitmètre.

Ce système d'estimation 1 comprend en outre un capteur 32 pour mesurer la concentration en oxygène $C_{O2}^{aval}$ des gaz d'échappement en aval du filtre à particules 2 et un capteur 33 pour mesurer la concentration en oxydes d'azote $C_{NOx}^{aval}$ des gaz d'échappement en aval du filtre à particules 2. Le capteur 32 de la concentration en oxygène peut être, par exemple, une sonde à oxygène.

Le premier moyen d'estimation 15 est en outre configure pour recevoir les mesures $Q_p^{FAP,amont}$, $C_{O2}^{aval}$, $C_{NOx}^{aval}$ des capteurs 31 à 33, via respectivement des connexions 35 à 37, afin de préciser l'estimation du débit de particules différentiel $\Delta Q_c$ selon l'équation (1).

Le deuxième moyen d'estimation 16 est en outre configuré, pour recevoir la mesure de la température en amont du filtre à particules $T_{amont.FAP}$ via une connexion 34, afin de préciser l'estimation de la pression différentielle $\Delta P_e$ selon l'équation (4).

On notera que le procédé d'estimation de la masse de particules stockées dans un filtre à particules de véhicule automobile peut être mise en oeuvre à l'aide du dispositif décrit précédemment, par des moyens logiciels ou par des circuits logiques intégrés dans l'unité de commande électronique UCE.

**Revendications**

1. Système d'estimation de la masse de particules stockées dans un filtre à particules (2) monté dans la ligne d'échappement (6) d'un moteur à combustion interne (3) de véhicule automobile, comprenant des moyens (7,8,18) configurés pour mesurer une pression différentielle aux bornes du filtre à particules, **caractérisé en ce qu'**il comprend un premier moyen d'estimation (15) configuré pour estimer un débit de particules différentiel aux bornes du filtre à particules, un deuxième moyen d'estimation (16) configuré pour estimer une pression différentielle aux bornes du filtre à particules, et un troisième moyen d'estimation (17) configuré pour estimer la masse de particules stockées dans le filtre à particules (2) à partir d'une somme entre le débit de particules différentiel et une valeur d'écart calculée entre l'estimation et la mesure de la pression différentielle.

**2.** Système d'estimation selon la revendication 1, comprenant un moyen de détermination (19) configuré pour déterminer un coefficient variable et pour transmettre le coefficient variable à un troisième moyen d'estimation (17), qui est configuré pour calculer la valeur d'écart en multipliant par le coefficient variable une différence entre l'estimation et la mesure de la pression différentielle.

**3.** Système selon la revendication 2, comprenant des moyens (10) pour mesurer un débit des gaz en amont du filtre à particules et dans lequel le moyen de détermination (19) est configuré pour déterminer le coefficient variable proportionnellement à la mesure du débit des gaz en amont du filtre à particules (2).

**4.** Système selon l'une des revendications 1 à 3, comprenant des moyens (9,32,33,31) configurés pour mesurer la température du filtre à particules, pour mesurer des concentrations en oxygène et en oxydes d'azote en aval du filtre à particules et pour mesurer un débit de particules en amont du filtre à particules, et dans lequel le premier moyen d'estimation (15) est configuré pour estimer un débit de particules en aval du filtre à particules à partir de l'estimation de la masse de particules stockées, des mesures des concentrations en oxygène et en oxydes d'azote et de la température du filtre à particules, et est configuré pour estimer le débit de particules différentiel à partir d'une différence entre la mesure du débit de particules en amont du filtre à particules et l'estimation du débit de particules en aval du filtre à particules.

**5.** Système selon l'une des revendications 1 à 3, comprenant des moyens (9) configurés pour mesurer la température du filtre à particules et dans lequel le premier moyen d'estimation comprend des moyens (24) configurés pour estimer une richesse, un couple, un régime et une température du moteur et pour estimer des concentrations en oxygène et en oxydes d'azote en aval du filtre à particules, le premier moyen d'estimation étant, en outre, configuré pour estimer un débit de particules en amont du filtre à particules à partir des estimations de la richesse, du couple, du régime et de la température du moteur, pour estimer un débit de particules en aval du filtre à particules à partir des estimations de la masse de particules stockées, des concentrations en oxygène et en oxydes d'azote, et à partir de la mesure de la température du filtre à particules, et pour estimer le débit de particules différentiel aux bornes du filtre à particules à partir d'une différence entre les estimations du débit de particules en amont et en aval du filtre à particules.

**6.** Procédé d'estimation de la masse de particules stockées dans un filtre à particules (2) monté dans la ligne d'échappement (6) d'un moteur à combustion interne (3) de véhicule automobile, comprenant une mesure de pression différentielle aux bornes du filtre à particules, **caractérisé en ce qu'**il comprend des étapes d'estimation d'un débit de particules différentiel et d'une pression différentielle aux bornes du filtre à particules et une étape d'estimation de la masse de particules stockées dans le filtre à particules (2) à partir d'une somme entre le débit de particules différentiel et le calcul d'un écart entre l'estimation et la mesure de la pression différentielle.

**7.** Procédé selon la revendication 6, comprenant une étape de détermination d'un coefficient variable, et dans lequel on multiplie l'écart calculé par le coefficient variable.

**8.** Procédé selon la revendication 7, dans lequel on mesure un débit des gaz en amont du filtre à particules et on détermine le coefficient variable proportionnellement à la mesure du débit des gaz en amont du filtre à particules.

**9.** Procédé selon l'une des revendications 6 à 8, comprenant une mesure de la température du filtre à particules, une mesure des concentrations en oxygène et en oxydes d'azote en aval du filtre à particules et une mesure d'un débit de particules en amont du filtre à particules, et dans lequel on estime un débit de particules en aval du filtre à particules à partir de l'estimation de la masse de particules stockées, des mesures des concentrations en oxygène et en oxydes d'azote, et de la température du filtre à particules, et on estime le débit de particules différentiel à partir d'une différence entre la mesure du débit de particules en amont du filtre à particules et l'estimation du débit de particules en aval du filtre à particules.

**10.** Procédé selon l'une des revendications 6 à 8, comprenant une mesure de la température du filtre à particules, et dans lequel :

- on estime une richesse, un couple, un régime et une température du moteur, on estime des concentrations en oxygène et en oxydes d'azote en aval du filtre à particules,
- on estime un débit de particules en amont du filtre à particules à partir des estimations de la richesse, du couple, du régime et de la température du moteur,
- on estime un débit de particules en aval du filtre à particules à partir des estimations de la masse de particules stockées, des concentrations en oxygène et en oxydes d'azote et à partir de la mesure de la température du filtre à particules,

et on estime le débit de particules différentiel aux bornes du filtre à particules à partir d'une différence entre les estimations du débit de particules en amont et en aval du filtre à particules.

**Patentansprüche**

1. System zur Schätzung der Masse von Partikeln, die in einem Partikelfilter (2) gespeichert sind, das in der Abgasleitung (6) eines Verbrennungsmotors (3) eines Kraftfahrzeugs angebracht ist, Mittel (7, 8, 18) aufweisend, die dafür ausgelegt sind, einen Differentialdruck an den Anschlüssen des Partikelfilters zu messen, **dadurch gekennzeichnet, dass** es aufweist: ein erstes Schätzmittel (15), das dafür ausgelegt ist, einen differentiellen Durchsatz von Partikeln an den Anschlüssen des Partikelfilters zu schätzen, ein zweites Schätzmittel (16), das dafür ausgelegt ist, einen Differentialdruck an den Anschlüssen des Partikelfilters zu schätzen, und ein drittes Schätzmittel (17), das dafür ausgelegt ist, die Masse von in dem Partikelfilter (2) gespeicherten Partikeln ausgehend von einer Summe des differentiellen Durchsatzes von Partikeln und eines berechneten Abweichungswertes zwischen der Schätzung und der Messung des Differentialdrucks zu schätzen.

2. System zur Schätzung nach Anspruch 1, welches ein Bestimmungsmittel (19) aufweist, das dafür ausgelegt ist, einen variablen Koeffizienten zu bestimmen und den variablen Koeffizienten zu einem dritten Schätzmittel (17) zu übertragen, welches dafür ausgelegt ist, den Abweichungswert zu berechnen, indem es eine Differenz zwischen der Schätzung und der Messung des Differentialdrucks mit dem variablen Koeffizienten multipliziert.

3. System nach Anspruch 2, welches Mittel (10) zum Messen eines Durchsatzes der Gase stromaufwärts des Partikelfilters aufweist, und wobei das Bestimmungsmittel (19) dafür ausgelegt ist, den variablen Koeffizienten proportional zur Messung des Durchsatzes der Gase stromaufwärts des Partikelfilters (2) zu bestimmen.

4. System nach einem der Ansprüche 1 bis 3, welches Mittel (9, 32, 33, 31) aufweist, die dafür ausgelegt sind, die Temperatur des Partikelfilters zu messen, die Konzentrationen von Sauerstoff und von Stickoxiden stromabwärts des Partikelfilters zu messen und einen Durchsatz von Partikeln stromaufwärts des Partikelfilters zu messen, und wobei das erste Schätzmittel (15) dafür ausgelegt ist, einen Durchsatz von Partikeln stromabwärts des Partikelfilters ausgehend von der Schätzung der Masse gespeicherter Partikel, den Messungen der Konzentrationen von Sauerstoff und von Stickoxiden und der Temperatur des Partikelfilters zu schätzen, und dafür ausgelegt ist, den differentiellen Durchsatz von Partikeln ausgehend von einer Differenz zwischen der Messung des Durchsatzes von Partikeln stromaufwärts des Partikelfilters und der Schätzung des Durchsatzes von Partikeln stromabwärts des Partikelfilters zu schätzen.

5. System nach einem der Ansprüche 1 bis 3, welches Mittel (9) aufweist, die dafür ausgelegt sind, die Temperatur des Partikelfilters zu messen, und wobei das erste Schätzmittel Mittel (24) aufweist, die dafür ausgelegt sind, eine Anreicherung, ein Drehmoment, eine Drehzahl und eine Temperatur des Motors zu schätzen und Konzentrationen von Sauerstoff und von Stickoxiden stromabwärts des Partikelfilters zu schätzen, wobei das erste Schätzmittel außerdem dafür ausgelegt ist, einen Durchsatz von Partikeln stromaufwärts des Partikelfilters ausgehend von den Schätzungen der Anreicherung, des Drehmoments, der Drehzahl und der Temperatur des Motors zu schätzen, einen Durchsatz von Partikeln stromabwärts des Partikelfilters ausgehend von den Schätzungen der Masse von gespeicherten Partikeln, der Konzentrationen von Sauerstoff und von Stickoxiden und ausgehend von der Messung der Temperatur des Partikelfilters zu schätzen, und den differentiellen Durchsatz von Partikeln an den Anschlüssen des Partikelfilters ausgehend von einer Differenz zwischen den Schätzungen des Durchsatzes von Partikeln stromaufwärts und stromabwärts des Partikelfilters zu schätzen.

6. Verfahren zur Schätzung der Masse von Partikeln, die in einem Partikelfilter (2) gespeichert sind, das in der Abgasleitung (6) eines Verbrennungsmotors (3) eines Kraftfahrzeugs angebracht ist, eine Messung eines Differentialdrucks an den Anschlüssen des Partikelfilters aufweisend, **dadurch gekennzeichnet, dass** es Schritte der Schätzung eines differentiellen Durchsatzes von Partikeln und eines Differentialdrucks an den Anschlüssen des Partikelfilters und einen Schritt der Schätzung der Masse von in dem Partikelfilter (2) gespeicherten Partikeln ausgehend von einer Summe des differentiellen Durchsatzes von Partikeln und der Berechnung einer Abweichung zwischen der Schätzung und der Messung des Differentialdrucks aufweist.

7. Verfahren nach Anspruch 6, welches einen Schritt der Bestimmung eines variablen Koeffizienten aufweist, und wobei die berechnete Abweichung mit dem variablen Koeffizienten multipliziert wird.

8. Verfahren nach Anspruch 7, wobei der Durchsatz der Gase stromaufwärts des Partikelfilters gemessen wird und der variable Koeffizient proportional zur Messung des Durchsatzes der Gase stromaufwärts des Partikelfilters bestimmt wird.

9. Verfahren nach einem der Ansprüche 6 bis 8, welches eine Messung der Temperatur des Partikelfilters, eine Messung der Konzentrationen von Sauerstoff und von Stickoxiden stromabwärts des Partikelfilters und eine Messung eines Durchsatzes von Partikeln stromaufwärts des Partikelfilters aufweist, und wobei ein Durchsatz von Partikeln stromabwärts des Partikelfilters ausgehend von der Schätzung der Masse gespeicherter Partikel, den Messungen der Konzentrationen von Sauerstoff und von Stickoxiden und der Temperatur des Partikelfilters geschätzt wird, und der differentielle Durchsatz von Partikeln ausgehend von einer Differenz zwischen der Messung des Durchsatzes von Partikeln stromaufwärts des Partikelfilters und der Schätzung des Durchsatzes von Partikeln stromabwärts des Partikelfilters geschätzt wird.

10. Verfahren nach einem der Ansprüche 6 bis 8, welches eine Messung der Temperatur des Partikelfilters aufweist, und wobei:

   - eine Anreicherung, ein Drehmoment, eine Drehzahl und eine Temperatur des Motors geschätzt werden und Konzentrationen von Sauerstoff und von Stickoxiden stromabwärts des Partikelfilters geschätzt werden,
   - ein Durchsatz von Partikeln stromaufwärts des Partikelfilters ausgehend von den Schätzungen der Anreicherung, des Drehmoments, der Drehzahl und der Temperatur des Motors geschätzt wird,
   - ein Durchsatz von Partikeln stromabwärts des Partikelfilters ausgehend von den Schätzungen der Masse von gespeicherten Partikeln, der Konzentrationen von Sauerstoff und von Stickoxiden und ausgehend von der Messung der Temperatur des Partikelfilters geschätzt wird,

   und der differentielle Durchsatz von Partikeln an den Anschlüssen des Partikelfilters ausgehend von einer Differenz zwischen den Schätzungen des Durchsatzes von Partikeln stromaufwärts und stromabwärts des Partikelfilters geschätzt wird.

**Claims**

1. System for estimating the mass of particles stored in a particle filter (2) mounted in the exhaust line (6) of a motor vehicle internal combustion engine (3), comprising means (7, 8, 18) configured to measure a differential pressure across the terminals of the particle filter, **characterized in that** it comprises a first estimating means (15) configured to estimate a differential flow rate of particles at the terminals of the particle filter, a second estimating means (16) configured to estimate a differential pressure across the terminals of the particle filter, and a third estimating means (17) configured to estimate the mass of particles stored in the particle filter (2) from a sum between the differential flow rate of particles and a calculated value of discrepancy between the estimate and the measurement of the differential pressure.

2. Estimating system according to Claim 1, comprising a determination means (19) configured to determine a variable coefficient and to transmit the variable coefficient to a third estimating means (17) which is configured to calculate the discrepancy value by multiplying, by the variable coefficient, a difference between the estimate and the measurement of the differential pressure.

3. System according to Claim 2, comprising means (10) for measuring a flow rate of the gases upstream of the particle filter and in which the determination means (19) is configured to determine the variable coefficient in proportion to the measurement of the flow rate of the gases upstream of the particle filter (2).

4. System according to one of Claims 1 to 3, comprising means (9, 32, 33, 31) configured to measure the temperature of the particle filter, to measure oxygen and nitrogen oxides concentrations downstream of the particle filter and to measure a flow rate of particles upstream of the particle filter, and in which the first estimating means (15) is configured to estimate a flow rate of particles downstream of the particle filter from the estimate of the mass of particles stored, from the measurements of the oxygen and nitrogen oxides concentrations and from the temperature of the particle filter and is configured to estimate the differential flow rate of particles from a difference between the measurement of the flow rate of particles upstream of the particle filter and the estimate of the flow rate of particles downstream of the particle filter.

5. System according to one of Claims 1 to 3, comprising means (9) configured to measure the temperature of the particle filter and in which the first estimating means comprises means (24) configured to estimate a richness, a torque, an engine speed and a temperature of the engine and to estimate oxygen and nitrogen oxides concentrations downstream of the particle filter, the first estimating means being further configured to estimate a flow rate of particles upstream of the particle filter from the estimates of the richness, the torque, the engine speed and the temperature of the engine, so as to estimate a flow rate of particles downstream of the particle filter from the estimates of the mass of particles stored, the oxygen and nitrogen oxides concentrations, and from the measurement of the temperature of the particle filter, and to estimate the differential flow rate of particles at the terminals of the particle filter from a difference between the estimates of the flow rate of particles upstream and downstream of the particle filter.

6. Method for estimating the mass of particles stored in a particle filter (2) mounted in the exhaust line (6) of a motor vehicle internal combustion engine (3), comprising a differential pressure measurement across the terminals of the particle filter, **characterized in that** it comprises steps of estimating a differential flow rate of particles and a differential pressure across the terminals of the particle filter and a step of estimating the mass of particles stored in the particle filter (2) from a sum between the differential flow rate of particles and the calculation of a discrepancy between the estimate and the measurement of the differential pressure.

7. Method according to Claim 6, comprising a step of determining a variable coefficient, and in which the calculated discrepancy is multiplied by the variable coefficient.

8. Method according to Claim 7, in which a flow rate of the gases upstream of the particle filter is measured and the variable coefficient is determined in proportion with the measurement of the flow rate of the gases upstream of the particle filter.

9. Method according to one of Claims 6 to 8, comprising a measurement of the temperature of the particle filter, a measurement of the oxygen and nitrogen oxides concentrations downstream of the particle filter and a measurement of a flow rate of particles upstream of the particle filter, and in which a flow rate of particles downstream of the particle filter is estimated from the estimate of the mass of particles stored, from the measurements of the oxygen and nitrogen oxides concentrations and from the temperature of the particle filter, and the differential flow rate of particles is estimated from a difference between the measurement of the flow rate of particles upstream of the particle filter and the estimate of the flow rate of particles downstream of the particle filter.

10. Method according to one of Claims 6 to 8, comprising a measurement of the temperature of the particle filter, and in which:

- a richness, a torque, an engine speed and a temperature of the engine is estimated, oxygen and nitrogen oxides concentrations downstream of the particle filter are estimated,
- a flow rate of particles upstream of the particle filter is estimated from the estimates of the richness, the torque, the engine speed and the temperature of the engine,
- a flow rate of particles downstream of the particle filter is estimated from the estimates of the mass of particles stored, the oxygen and nitrogen oxides concentrations and from the measurement of the temperature of the particle filter,

and the differential flow rate of particles at the terminals of the particle filter is estimated from a difference between the estimates of the flow rate of particles upstream and downstream of the particle filter.

EP 2 507 491 B1

FIG.1

11

FIG.2

**EP 2 507 491 B1**

**Documents brevets cités dans la description**

- FR 2849103
- EP 152992 A1
- EP 1209333 A1

**Littérature non-brevet citée dans la description**

- **R.E. KALMAN ; R. BUCY.** New results in linear filtering and prediction. *Journal of basic engineering (ASME),* 1961, vol. 83D, 98-108